(19) **Europäisches Patentamt / European Patent Office / Office européen des brevets**

(11) **EP 4 786 410 A2**

(12) **EUROPEAN PATENT APPLICATION**

(43) Date of publication:
**05.08.2026 Bulletin 2026/32**

(21) Application number: **26186657.8**

(22) Date of filing: **20.06.2023**

(51) International Patent Classification (IPC):
***B82Y 10/00*** (2011.01)

(52) Cooperative Patent Classification (CPC):
**G06N 10/40; G06N 10/70;** B82Y 10/00; G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(62) Document number(s) of the earlier application(s) in accordance with Art. 76 EPC:
**23180476.6 / 4 481 633**

(71) Applicants:
- **Alice & Bob**
  **75015 Paris (FR)**
- **Centre National de la Recherche Scientifique**
  **75016 Paris (FR)**
- **SORBONNE UNIVERSITE**
  **75006 Paris (FR)**
- **Ecole Normale Supérieure**
  **75005 Paris (FR)**
- **Université Paris Cité**
  **75006 Paris (FR)**
- **Ecole Nationale Superieure des Mines de Paris**
  **75006 Paris (FR)**
- **Association pour la Recherche et le Développement**
  **de Méthodes et Processus Industriels**
  **75006 Paris (FR)**

- **Ecole Normale Supérieure de Lyon**
  **69007 Lyon (FR)**
- **UNIVERSITE CLAUDE BERNARD LYON 1**
  **69100 Villeurbanne (FR)**

(72) Inventors:
- **JEZOUIN, Sébastien**
  **75015 PARIS (FR)**
- **REGLADE, Ulysse**
  **75015 PARIS (FR)**
- **BOCQUET, Adrien**
  **75015 PARIS (FR)**
- **MARQUET, Antoine**
  **75015 PARIS (FR)**
- **HUARD, Benjamin**
  **75015 PARIS (FR)**

(74) Representative: **Atout PI Laplace**
**Immeuble Up On**
**25 Boulevard Romain Rolland**
**CS 40072**
**75685 Paris Cedex 14 (FR)**

Remarks:
This application was filed on 22-06-2026 as a divisional application to the application mentioned under INID code 62.

(54) **METHOD OF MEASURING AN OBSERVABLE OF A CAT QUBIT**

(57) The invention relates to a method for performing a Pauli gate on a cat qubit implemented by a quantum system (1), the Pauli gate corresponding to a rotation by an angle θ around an axis of the Bloch sphere of the cat qubit, said quantum system (1) including a command circuit (5) for delivering microwave radiations and a non-linear superconducting quantum circuit (3), the command circuit (5) being configured to deliver microwave radiation to the non-linear superconducting quantum circuit (3) to stabilize or confine the cat qubit. The invention also relates to the associated quantum system.

FIG. 1

**Description**

The field of the invention relates to the measurement of an observable of a cat qubit. More specifically, the observable to be measured is the Pauli operator X, the Pauli operator Y or the parity operator.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a first mode - also known as memory mode or cat qubit mode - that hosts the stabilized quantum manifold and one photon of a second mode - also known as buffer mode - that is strongly dissipative.

The possibility of realizing such a qubit has been demonstrated by R. Lescanne et al. in "Exponential suppression of bit-flips in a qubit encoded in an oscillator" (Nature Physics, 2020). As above-mentioned, the cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability.

For the purpose of determining the state of the cat qubit, a transmon is commonly used as measurement apparatus coupled to the cat qubit mode. For instance, Lescanne *et al.* (2020) proposed to use an asymmetrically threaded superconducting quantum interference device - hereinafter ATS - to engineer the 2-to-1 photon conversion associated with a transmon for measuring the cat qubit state. However, as pointed out in this article, such an architecture results in a bit-flip time saturating to a few milliseconds. The Applicant's work revealed that this is due to the quantum manifold stabilization rate being too small to resist to dispersive frequency shifts induced by thermal excitations of the measurement apparatus. Indeed, a transmon has spurious cross-Kerr terms which induce additional noise processes with escape rates out of the quantum manifold given by the very large transmon-cat-qubit dispersive shift.

Moreover, the issues of the transmon had already been observed in the very first implementations of the above-described stabilization scheme - Z. Leghtas et al. (2015) in the article "Confining the state of light to a quantum manifold by engineered two-photon loss" (Science, Vol. 347, No. 6224) and S. Touzard et al. (2018) in the article "Coherent Oscillations inside a Quantum Manifold Stabilized by Dissipation" (Physical Review X 8, 023005) - in which the superconducting circuit element used as a four-wave mixer was a transmon with a single Josephson junction.

There is therefore a need to measure the state of a cat qubit without using a transmon. Such a need is motivated by a recent work - Berdou et al. (2022) in the article "One hundred second bit-flip time in a two-photon dissipative oscillator" (arXiv:2204.09128, https://arxiv.org/pdf/2204.09128.pdf) - which attained bit-flip times of the order of 100 seconds by removing the measuring transmon and operating the ATS in a regime where it is supposed to be dynamically stable. On the other hand, the measurement apparatus used in Berdou *et al.* (2022) in place of the transmon was unable to measure an observable of the cat qubit related to quantum superpositions of the coherent states of the cat qubit. Yet, measuring such an observable is a prerequisite to any quantum application.

The present invention seeks to improve the situation.

To this end, the Applicant proposes a method of measuring an observable of a cat qubit implemented by a quantum system, the observable to be measured being among the parity operator, the Pauli operator X and the Pauli operator Y.

The quantum system includes a command circuit for delivering microwave radiations and a non-linear superconducting quantum circuit including a three- or four-wave mixing non-linear element and at least one resonant portion to which the three- or four-wave mixing non-linear element is connected, the non-linear superconducting quantum circuit having a first mode with a first resonant frequency and a second mode with a second resonant frequency.

The method comprises the following operations:

a) delivering, by the command circuit, microwave radiation at a frequency equal to the second resonant frequency to the at least one resonant portion to drive the second mode, thereby causing the three- or four-wave mixing non-linear element to engineer a jump operator $L_2^\alpha$ expressed as $L_2^\alpha = \sqrt{\kappa_2}(a^2 - \alpha^2)$ stabilizing a two-dimensional manifold hosting the cat qubit, where $\kappa_2$ is the two-photon dissipation rate, *a* is the annihilation operator of the first mode and $\alpha$ is a complex number resulting from the delivered microwave radiation,

b) mapping the observable to be measured to the Pauli operator Z, the mapping being dependent on the observable to be measured and including at least: b1) turning off or reducing the drive of the second mode for causing $\alpha$ to reach a value which square modulus is less than 1, and subsequently b2) turning on or increasing the drive of the second mode for causing $\alpha$ to reach a value which square modulus is greater than or equal to 2, said mapping further including b3)

applying a $\frac{\pi}{2}$-Pauli gate to the cat qubit during b1) or b2) at an instant for which $\langle a^\dagger a \rangle$ is less than 2, and

c) measuring the value of the Pauli operator Z.

According to one or more embodiments, the observable to be measured is the Pauli operator Y, and b3) includes applying a Pauli-X($\frac{\pi}{2}$) gate to the cat qubit.

According to one or more embodiments, the observable to be measured is the Pauli operator X, b) further includes b0) applying a Pauli-Z($\frac{\pi}{2}$) gate to the cat qubit prior to b1), and b3) includes applying a Pauli-X($\frac{\pi}{2}$) gate to the cat qubit.

According to one or more embodiments, the observable to be measured is the parity operator, the parity operator being mapped to the Pauli operator X throughout a), b) further includes b0) applying a Pauli-Z($\frac{\pi}{2}$) gate to the cat qubit prior to b1), and b3) includes applying a Pauli-X($\frac{\pi}{2}$) gate to the cat qubit.

According to one or more embodiments, the command circuit includes one or more microwave sources for performing a), applying a Pauli-X($\frac{\pi}{2}$) gate to the cat qubit is performed by shifting by an angle $\pi$ the phase of a microwave source among the one or more microwave sources.

According to one or more embodiments, the observable to be measured is the Pauli operator X, and b3) includes applying a Pauli-Y($\frac{\pi}{2}$) gate to the cat qubit.

According to one or more embodiments, the observable to be measured is the parity operator, the parity operator being mapped to the Pauli operator X throughout a), and b3) includes applying a Pauli-Y($\frac{\pi}{2}$) gate to the cat qubit.

According to one or more embodiments, applying a Pauli-Y($\frac{\pi}{2}$) gate or applying a Pauli-Z($\frac{\pi}{2}$) gate to the cat qubit is performed by delivering, by the command circuit, microwave radiation at a frequency equal to the first resonant frequency to the at least one resonant portion to drive the first mode, thereby engineering a Hamiltonian $H_z$ expressed as $H_z/\hbar = \epsilon_z a + \text{h.c.}$, where $\varepsilon_z$ results from the amplitude and phase of the drive of the first mode.

According to one or more embodiments, c) includes c1) applying a displacement operator $D(\pm\alpha_T) = e^{\pm\alpha_T a^\dagger \mp \alpha_T^* a}$ to the cat qubit, subsequently c2) delivering, by the command circuit, microwave radiation at a frequency equal to a resonant frequency $f_b'$ substantially equal to the second resonant frequency to parametrically drive a four-wave mixing non-linear element of the quantum system, thereby causing the four-wave mixing non-linear element to engineer a Hamiltonian H expressed as $H/\hbar = g_L a^\dagger a(b + b^\dagger)$, where $g_L$ results from the amplitude of the microwave radiation and b is the annihilation operator of the second mode, the Hamiltonian H yielding through longitudinal coupling between the first mode and the second mode, and c3) performing heterodyne or homodyne detection on the second mode.

According to one or more embodiments, c) includes c1) applying a displacement operator $D(\pm\alpha_T) = e^{\pm\alpha_T a^\dagger \mp \alpha_T^* a}$ to the cat qubit, subsequently c2) engineering a Hamiltonian H expressed as $H/\hbar = \chi a^\dagger a b^\dagger b$, where $\chi$ is a frequency shift per photon, and b is the annihilation operator of the second mode, the Hamiltonian H yielding through cross-Kerr in between the first mode and the second mode, the cross-Kerr being prone to modify the second resonant frequency, and subsequently c3) measuring the second resonant frequency.

According to one or more embodiments, c) includes c1) delivering, by the command circuit, microwave radiation equal to the absolute difference between the first resonant frequency and the second resonant frequency if the three- or four-wave mixing non-linear element is a three-wave mixing non-linear element or equal to half of the absolute difference between the first resonant frequency and the second resonant frequency if the three- or four-wave mixing non-linear element is a four-wave mixing non-linear element to parametrically drive the three- or four-wave mixing non-linear element, thereby causing said three- or four-wave mixing non-linear element to engineer a Hamiltonian H expressed as $H/\hbar = g_c(a^\dagger b + b^\dagger a)$, where $g_c$ results from the amplitude of the microwave radiation and b is the annihilation operator of the second mode, the Hamiltonian H yielding through single-photon conversion the first mode and the second mode, and c2) performing heterodyne or homodyne detection on the second mode.

According to one or more embodiments, c) includes c1) delivering, by the command circuit, microwave radiation at a frequency equal to the second resonant frequency to the at least one resonant portion to drive the second mode, thereby causing the three- or four-wave mixing non-linear element to engineer a jump operator $L_2^{\alpha_T}$ expressed as $L_2^{\alpha_T} = \sqrt{\kappa_2}(a^2 - \alpha_T{}^2)$, c2) delivering, by the command circuit, microwave radiation at a frequency equal to the first resonant frequency to the at least one resonant portion to drive the first mode, thereby causing said three- or four-wave mixing non-linear element to engineer a Hamiltonian H expressed as $H/\hbar = \epsilon_z a + \text{h.c.}$, where $\varepsilon_z$ results from the amplitude and phase of the drive of the first mode, and c3) performing heterodyne or homodyne detection on the second mode.

According to one or more embodiments, a transmission line is weakly coupled to the first mode (a), and c) includes performing heterodyne or homodyne detection to detect electromagnetic field in the transmission line.

According to one or more embodiments, the three- or four-wave mixing non-linear element is a four-wave mixing non-linear element formed by an asymmetrically threaded superconducting quantum interference device.

According to one or more embodiments, the three- or four-wave mixing non-linear element is a three-wave mixing non-linear element formed by at least one loop including a first Josephson junction, a central inductive element and a second Josephson junction, the non-linear superconducting quantum circuit being configured such that, when a predetermined current of a constant intensity is applied, the second resonant frequency is substantially equal to twice the first resonant frequency.

Other features and advantages of the invention will become apparent from the following description provided for indicative and non-limiting purposes, with reference to the accompanying drawings, wherein:

- Figure 1 schematically illustrates a quantum system arranged to measure an observable of a cat qubit according to the invention,

- Figure 2 illustrates an embodiment of the quantum system of figure 1 in which a cat qubit is stabilized using a parametric dissipative stabilization,

- Figure 3 illustrates a partial electrical equivalent diagram of an example implementation of a non-linear superconducting quantum circuit of the quantum system of figure 2, with only an ATS and two resonant portions shown,

- Figure 4 illustrates a partial electrical equivalent diagram of another example implementation of a non-linear superconducting quantum circuit of the quantum system of figure 2, with only an ATS and two resonant portions shown,

- Figure 5 partially illustrates an example implementation of the quantum system of figure 2, with part of the external environment shown,

- Figure 6 partially illustrates another example implementation of the quantum system of figure 2, with part of the external environment shown,

- Figure 7 partially illustrates another embodiment of the quantum system of figure 1 in which a cat qubit is stabilized using a resonant dissipative stabilization,

- Figure 8 partially illustrates an example implementation of the quantum system of figure 7,

- Figure 9 illustrates a method of measuring an observable of a cat qubit according to the invention,

- Figure 10 illustrates a mapping operation of the method of figure 9,

- Figure 11 illustrates the projection of the mapping operation of figure 10 onto a cat coding space in the context of a measurement of the parity operator according to a first embodiment,

- Figure 12 illustrates the time evolution of different parameters involved in the mapping operation of figure 11,

- Figure 13 illustrates a Wigner tomography performed using an experimental measurement of the parity measurement implemented according to figures 11 and 12,

- Figure 14 illustrates a physical chip layout of the realization of the quantum system of figure 5 used to perform the Wigner tomography of figure 13.

- Figure 15 illustrates the projection of the mapping operation of figure 10 onto a cat coding space in the context of a measurement of the parity operator according to a second embodiment,

- Figure 16 illustrates the time evolution of different parameters involved in the mapping operation of figure 15,

- Figure 17 illustrates the projection of the mapping operation of figure 10 onto a cat coding space in the context of a measurement of the Pauli operator Y, and

- Figure 18 illustrates a longitudinal coupling process to read the value of the Pauli operator Z to which the observable to be measured is mapped.

The drawings and the following description are comprised for the most part of positive and well-defined features. As a result, they are not only useful in understanding the invention, but they can also be used to contribute to its definition, should the need arise.

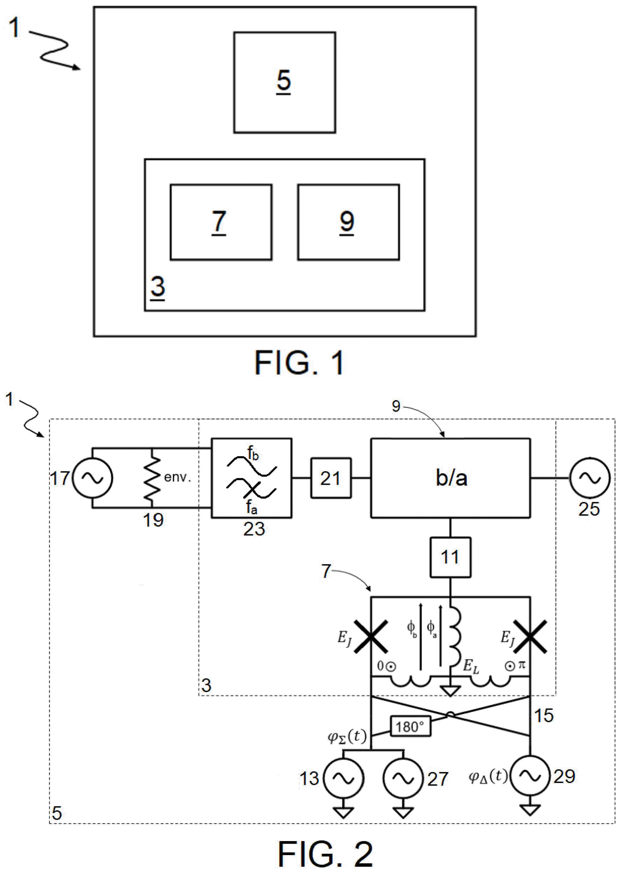

Figure 1 illustrates a schematic diagram of a quantum system 1.

The quantum system 1 is arranged both to stabilize a cat qubit and to measure an observable thereof.

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

The definition of the cat states $|C_\alpha^\pm\rangle$ can be extended to $\alpha = 0$ by analytic continuation:

$$|C_\alpha^+\rangle \xrightarrow[|\alpha|\to 0^+]{} |0\rangle$$

$$|C_\alpha^-\rangle \xrightarrow[|\alpha|\to 0^+]{} |1\rangle$$

where: $|0\rangle$ and $|1\rangle$ are Fock states with, respectively, 0 and 1 photon.

Consequently, when $\alpha = 0$, the cat qubit manifold spans all superpositions of $|0\rangle$ and $|1\rangle$ Fock states.

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode and by engineering the Hamiltonian $H/\hbar = g_2(a^2 - \alpha^2)b^\dagger + \mathrm{h.\,c.}$, where b is the photon annihilation operator of the buffer mode b and $g_2$ is the two-photon coupling rate, by applying to the four-wave mixing device a pump at frequency $|2f_a\text{-}f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where K is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \mathrm{h.\,c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS - to the cat qubit mode and by engineering the Hamiltonian $H/\hbar = g_{SC}\left(\left(\cosh(r)a + \sinh(r)e^{i\theta}a^\dagger\right)^2 - \alpha^2\right)b^\dagger + \mathrm{h.\,c.}$, where b is the photon annihilation operator of mode b and $g_{SC}$ is the squeezed two-photon coupling rate, with several pumps at frequencies $2f_a - f_b$, $f_b$ and $2f_a + f_b$, and a drive of the buffer mode at frequency $f_b$ provided $g_{SC} < \kappa_b$.

f) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2 - \alpha^2)b^\dagger + \mathrm{h.\,c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

In the context of the present invention, the quantum system 1 is arranged to implement a parametric dissipative stabilization according to scheme a) or a resonant dissipative stabilization according to scheme f). In both cases, the cat qubit is stabilized through the engineering of a jump operator - or dissipator - $L_2^\alpha$ expressed as $L_2^\alpha = \sqrt{\kappa_2}(a^2 - \alpha^2)$.

The parametric dissipative stabilization relies on generating the following terms:

- $a^2$: this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b. Such a pump is thus a two-photon pump.
- $\alpha^2$ : this second term requires the drive of the second mode b at a frequency $f_b$. Such a drive is thus a two-photon drive.

The resonant dissipative stabilization corresponds to the particular case where $2f_a = f_b$, and therefore where the 2-to-1 photon conversion is not activated by parametric pumping.

Consequently, only the drive of the second mode b at a frequency $f_b$ is necessary to engineer the jump operator $L_2^\alpha$ .

As illustrated in figure 1, the quantum system 1 comprises a non-linear superconducting quantum circuit 3 and a command circuit 5.

The non-linear superconducting quantum circuit 3 is arranged to make possible three-wave mixing or four-wave mixing between a first mode a and a second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$ , where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The non-linear superconducting quantum circuit 3 is intended to be subject to microwave radiations delivered by the command circuit 5 in order to engineer various non-linear interactions between the first mode a and the second mode b. The frequency of each microwave radiation is tuned to select specific terms within the rotating wave approximation.

The non-linear superconducting quantum circuit 3 comprises a non-linear element 7 and at least one resonant portion 9.

The non-linear element 7 is arranged to engineer the jump operator $L_2^\alpha$ for stabilizing the cat qubit. As previously explained, such a stabilization can be a parametric dissipative stabilization or a resonant dissipative stabilization.

In the case in which a parametric dissipative stabilization is implemented, the non-linear element 7 is a four-wave mixing non-linear element.

The four-wave mixing non-linear element is for instance an ATS. It is known to the skilled person that an ATS can be used to engineer the 2-to-1 photon conversion, i.e. the first term $a^2$ of the jump operator $L_2^\alpha$ , in order to perform a parametric dissipative stabilization, as successfully shown by R. Lescanne *et al.* (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to the first implementations of this stabilization scheme proposed by Z. Leghtas *et al.* (2015) and S. Touzard *et al.* (2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

Typically, the ATS has flux lines through which radiation can be delivered to modulate a common flux and/or a differential flux.

In the case in which a resonant dissipative stabilization is implemented, the non-linear element 7 is a three-wave mixing non-linear element.

As above-mentioned, the resonant case corresponds to the particular situation where $2f_a = f_b$ ($f_p = 0$) and may be particularly advantageous, as developed in the European patent application EP 21306965.1 filed by the Applicant. In such a resonant case, the 2-to-1 photon conversion cannot be activated by parametrically pumping a four-wave mixing non-linear element: a three-wave mixing non-linear element should be used instead.

However, as detailed below, the measurement of the observable of the cat qubit may involve engineering a Hamiltonian that requires four-wave mixing. Typically, a longitudinal coupling between the first mode a and the second mode b can be used to carry out the measurement of an observable of the cat qubit. Yet, the longitudinal term $a^\dagger a b^\dagger$ of the corresponding Hamiltonian still requires four-wave mixing to be engineered. Hence, the resonant situation may require both a three-wave mixing non-linear element for stabilizing the cat qubit and a four-wave mixing non-linear element for measuring an observable of the cat qubit. The three-wave mixing can arise by operating the ATS at a different flux working point than the $0 - \pi$ flux working point it is usually operated at or by adding another non-linear element as described in the above-mentioned European patent application EP 21306965.1.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the ATS, noted $\varphi_a$ for the first mode a and $\varphi_b$ for the second mode b.

In the schematic diagram of the quantum system 1 illustrated in figure 1, the non-linear superconducting quantum system 3 comprises only one resonant portion, i.e. the resonant portion 9. However, it should be understood here that the non-linear superconducting quantum system 3 comprises at least one resonant portion, and typically two resonant portions to eventually form two electromagnetic modes.

The command circuit 5 is arranged to deliver microwave radiations.

In the context of the quantum system 1, the command circuit 5 is arranged at least to drive the second mode b by delivering radiation at a frequency equal to the second resonant frequency $f_b$ to the resonant portion 9 since both the parametric dissipative stabilization and the resonant dissipative stabilization require such a drive of the second mode b.

Figure 2 shows a detailed architecture of the quantum system 1 for implementing a parametric dissipative stabilization.

Consequently, the non-linear element 7 is a four-wave mixing non-linear element, and more exactly an ATS to which the resonant portion 9, which is a linear microwave network b/a, is connected.

It is known to the skilled person that, when biased at its flux working point ($0 - \pi$ or conversely), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering microwave radiations through flux lines of the ATS 7 out of phase, the latter can be implemented by delivering microwave radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the non-linear resonant part of the Hamiltonian writes in the rotating frame:

$$H_{ATS} = \frac{E_J \epsilon_{2ph} \varphi_a^2 \varphi_b}{2}\big(a^2 b^\dagger + \text{h.c.}\big)$$

which is typically the two-to-one photon exchange Hamiltonian needed to engineer the two-photon stabilization.

Referring again to figure 2, the linear microwave network b/a is such that, when coupled via a linear coupler 11 to the ATS 7 which acts as an inductive element, the non-linear superconducting quantum circuit 3 has the first mode a and the second mode b at respective resonant frequencies $f_a$ and $f_b$ which participate in the ATS 7.

When an external DC magnetic field is set such that a $0 \bmod 2\pi$ magnetic flux threads one of the loop and a $\pi \bmod 2\pi$ flux threads the other loop, it is ensured that the ATS Hamiltonian has its "sin-sin" form. For clarity, the set-up applying the external DC magnetic field is not drawn on figure 2 but can be applied via the two bottom mutual inductances of the ATS 7. A typical implementation consists in interleaving a bias-tee connected to a DC current source to input DC current into the system while letting the microwave radiations go through.

A microwave source 13 is set-up to modulate the common flux in the ATS 7.

For this purpose, a microwave network 15 is used to split the radiation emitted by the microwave source 13 and apply it to each node of the ATS 7 with the correct phase. Alternatively, two different microwave sources could be used, each being simply coupled to a single node of the ATS 7 and their relative phase and amplitude being set so as to achieve the desired flux modulation.

When the microwave source 13 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 19 via a linear coupler 21 and a microwave filter 23 configured as a band pass filter with a frequency $f_b$.

Alternatively, the microwave filter 23 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 19.

Alternatively, it may be configured as a low-pass (respectively high-pass) filter if $f_a > f_b$ (resp $f_b > f_a$). In other embodiments, the microwave filter 23 can be omitted when coupling between the load 19 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a microwave source 17 set at frequency $f_b$.

In the above, the load 19 can be seen as part of the command circuit 5 of figure 2, while the linear coupler 21 and the microwave filter 23 can be seen as part of the non-linear superconducting quantum circuit 3.

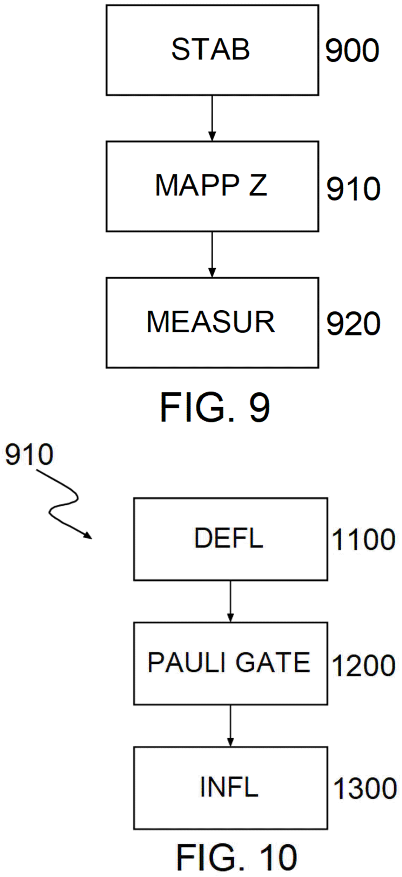

In addition to stabilizing the cat qubit, the command circuit 5 also makes it possible to measure an observable of the latter. As detailed below, especially with reference to figure 9 and following, the measurement method which is the subject matter of the present invention includes the mapping of the observable to be measured to the Pauli operator Z as well as the measurement of the latter. To this end, and as shown in figure 2, the command circuit 5 further comprises a microwave source 25, a microwave source 27 and a microwave source 29.

The microwave source 25 is arranged to drive the first mode a by delivering microwave radiation at the frequency $f_a$ to the linear microwave network b/a. Such a drive of the first mode a causes the non-linear superconducting quantum circuit 3 to engineer a Hamiltonian H$_Z$ expressed as $H_z/\hbar = \epsilon_z a + \text{h. c.}$, where the complex rate $\varepsilon_z$ results from the amplitude and phase of the drive of the first mode a.

Such a Hamiltonian H$_Z$ can be involved in the mapping of the observable to be measured. When engineered in conjunction with the two-photon dissipation, the Hamiltonian H$_Z$ allows applying a Pauli gate to the cat qubit, and more precisely a Pauli-Y gate or a Pauli-Z gate depending on the size of the cat qubit and the phase of the drive of the first mode a.

Furthermore, such a Hamiltonian H$_Z$ can be involved in the measurement as such. When engineered in conjunction with the two-photon dissipation, the Hamiltonian H$_Z$ allows through performing heterodyne or homodyne detection on the second mode b to measure the value of the Pauli operator Z.

The microwave source 27 is set-up, in addition to the microwave source 13, to modulate the common flux in the ATS 7. As detailed below, such a microwave source 27 can be involved in the measurement as such. The microwave source 27 is arranged to deliver microwave radiation for causing the non-linear superconducting quantum circuit 3 to engineer a Hamiltonian. For instance, such a Hamiltonian yields through longitudinal coupling between the first mode a and the second mode b.

Finally, the microwave source 29 is set-up to modulate the differential flux in the ATS 7 through the microwave network 15. The microwave source 29 can be used to reduce spurious Hamiltonian terms induced by the microwave source 27. It is to be noted that the microwave network 15 is used for convenience but can be omitted and the microwave source 29 and the microwave source 27 could be applied directly to both nodes of the ATS 7, their relative phase and amplitude being set so as to achieve the desired flux modulation.

For the sake of completeness, it may also be noted that the microwave source 29 can be used, instead of the microwave source 17, to deliver microwave radiation at a frequency $f_b$ to the linear microwave network b/a to drive the second mode b.

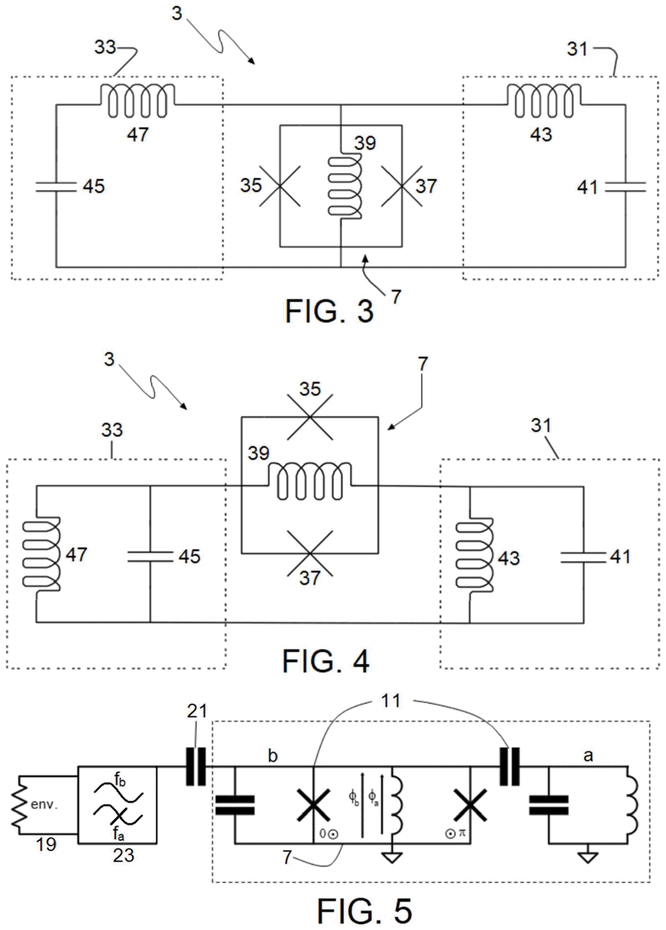

Figures 3 and 4 illustrate electrical equivalent diagrams of respective embodiments of the non-linear superconducting quantum circuit 3 which takes the form of a galvanic circuit. Such electrical equivalent diagrams are partial since they both only represent the ATS 7 and the linear microwave network b/a, and thus represent neither the linear coupler 21 nor the microwave filter 23. More particularly, the linear microwave network b/a includes a first resonant portion 31 and a second resonant portion 33.

The ATS 7 is realized as known in the art, for example in R. Lescanne *et al.* (2020). The ATS 7 includes a first Josephson junction 35 and a second Josephson junction 37 in parallel, and an inductive element 39 in parallel between them. As a result, the ATS 7 has two connected loops, each loop comprising a Josephson junction in parallel with the shunt inductive element. The inductive element 39 can be realized either geometrically or with a chain of junctions. The ATS 7 has both of its loops flux biased in DC and AC. The DC bias sets the flux working point of the ATS 7. It may be operated near the so-called saddle point, which is a sweet spot in frequency and has small cross-Kerr terms.

Both the first resonant portion 31 and the second resonant portion 33 are galvanically coupled to the ATS 7. The first resonant portion 31 confers the first mode a having the resonant frequency $f_a$ to the non-linear superconducting quantum circuit 3, while the second resonant portion 33 confers the second mode b having the resonant frequency $f_b$ to the non-linear superconducting quantum circuit 3.

By "galvanically coupled", it should be understood here that there are short electrically conducting portions which connect the first resonant portion 31 and the second resonant portion 33 to the ATS 7, i.e., a short electrically conducting track or any other mean ensuring a physically continuous conducting junction. The expression "short" means that the electrically conducting track has an impedance which is negligeable compared to the impedance of the ATS 7, the first resonant portion 31 and the second resonant portion 33 at the resonant frequencies $f_a$ and $f_b$. These short electrically conducting portions correspond to the linear coupler 11 of figure 2.

In the embodiment of figure 3, the first resonant portion 31 includes a capacitive element 41 and an inductive element 43 which are connected in series. Similarly, the second resonant portion 33 includes a capacitive element 45 and an inductive element 47 which are connected in series.

In the embodiment of figure 4, the first resonant portion 31 also includes the capacitive element 41 and the inductive element 43. However, in such embodiment, the capacitive element 41 and the inductive element 43 are connected in parallel. Similarly, the capacitive element 45 and the inductive element 47 of the second resonant portion 33 are connected in parallel.

In the respective embodiments of figures 3 and 4, the microwave linear network b/a includes two resonant portions. However, as previously explained, the microwave linear network b/a may comprise only one resonant portion which is arranged to produce both the first mode a and the second mode b.

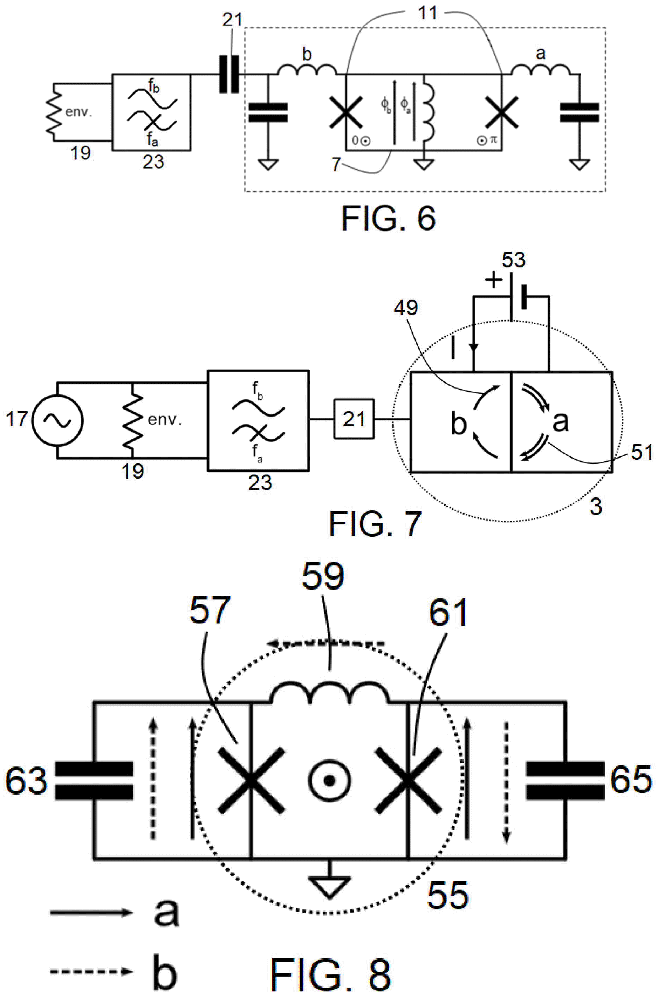

Figures 5 and 6 both illustrate a possible example implementation of the quantum system 1 of figure 2. Contrary to figure 3 and figure 4, the external environment is represented. The ATS 7 serves as a central reference point to which the rest of the components are connected. The filtering and external environment of the second mode b are also present to this end. The microwave sources have been omitted for simplicity but are arranged in the same way as in figure 2 to run the circuit.

In figure 5, the linear microwave network b/a is formed by a capacitor galvanically coupled to the ATS 7 to form the second mode b, and a parallel LC resonator strongly capacitively coupled to the ATS 7 to form the first mode a. The couplings to the ATS 7 form the linear coupler 11. The buffer is coupled to the external environment by a capacitance 19.

In figure 6, the linear microwave network b/a consists of two series LC resonators galvanically coupled to the ATS 7 to form the first mode a and the second mode b. The buffer is coupled to the external environment by a capacitance 19. It can be noted that the diagram of the ATS 7 and the linear microwave network b/a corresponds to that illustrated in figure 3, the first mode a corresponding to the first resonant portion 31 and the second mode b corresponding to the second resonant portion 33.

Figures 2 to 6 discussed above show an embodiment of the quantum system 1 in which the non-linear element 7 is an ATS and in which the cat qubit is stabilized using parametric dissipative stabilization.

However, as previously explained, the method of measuring an observable of a cat qubit according to the present invention can also be implemented with a three-wave mixing non-linear element as a non-linear element 7 and by stabilizing the cat qubit with a resonant dissipative stabilization. Figures 7 and 8 both relate to such an embodiment.

Figure 7 partially illustrates the quantum system 1. In this figure, the three-wave mixing non-linear element 7 and the at least one resonant portion 9 are brought together to form the non-linear superconducting quantum circuit 3. As previously explained, such a non-linear superconducting quantum circuit 3 is arranged to perform intrinsically the 2-to-1 photon conversion - symbolized here by a back-and-forth single arrow 49 and double arrows 51 - between the first mode a and the second mode b.

A current source 53 is connected via wires to the non-linear superconducting quantum circuit 3. Such a current source 53 can be considered as part of the command circuit 5.

The current source 53 is directly connected to the non-linear superconducting quantum circuit 3 so that current applied by the current source 53 flows through at least a subset of components of the non-linear superconducting quantum circuit 3. The current source 53 is configured to both allow three-wave mixing interaction and to tune the frequency matching condition $2f_a = f_b$.

Similarly to figure 2, the second mode b is coupled to a load 19 via a linear coupler 21, and such a coupling cause the second mode b to be dissipative. The microwave source 17 is arranged to deliver microwave radiation at a frequency equal to $f_b$ to the resonant portion 9 to drive the second mode b. As a reminder, the two-photon drive is needed for both the parametric dissipative stabilization and the resonant dissipative stabilization.

Here too, a microwave filter 23 configured as a band pass filter with a frequency $f_b$ is present. Alternatively, the microwave filter 23 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 19.

Figure 8 illustrates an example implementation of the quantum system 1 of figure 7, and more particularly a possible circuit to realize a three-wave mixing non-linear element.

The three-wave mixing non-linear element is formed by at least one loop 55 including a first Josephson junction 57, a central inductive element 59 and a second Josephson junction 61.

When a predetermined current of a constant intensity is applied by the current source 53, the resonant frequency $f_b$ is substantially equal to twice the resonant frequency $f_a$. The circuit shown in figure 8 is particularly configured to discriminate symmetrically the first mode a and the second mode b. The high symmetry of such a circuit achieves an improved quality of the 2-to-1 photon conversion.

The central inductive element 59 can be an inductance, a single Josephson junction or an array of Josephson junctions. The central inductive element 59 may thus be arranged between the first Josephson junction 57 and the second Josephson junction 61 as a loop in series. The arrangement in series may comprise a first inner node connecting a pole of the first Josephson junction 57 with a pole of the central inductive element 59. The arrangement in series may also comprise a second inner node connecting a pole of the second Josephson junction 61 with another pole of the central inductive element 59. The arrangement in series may also comprise a closed-loop node connecting another pole of the first Josephson junction 57 with another pole of the second Josephson junction 61.

The at least one loop 55 may be connected to a common ground via the closed-loop node. The circuit may also comprise a first capacitor 63 and a second capacitor 65. The first capacitor 63 may be connected in parallel with the first Josephson junction 57 between the common ground and the first inner node of the loop. The second capacitor 65 may be connected in parallel with the second Josephson junction 61 between the common ground and the second inner node of the loop.

The first Josephson junction 57 and the second Josephson junction 61 are substantially identical and the capacitive elements 63 and 65 are also substantially identical. Hence, the symmetry of the circuit implies that the first mode a is the symmetric superposition of the two resonators (as shown by the full arrows) and the second mode b is the anti-symmetric superposition of the two resonators (as shown by the dashed arrows). It can be noticed that only the second mode b has a contribution across the central inductive element 59 which is advantageously used to preferentially couple the external environment to this second mode b while isolating the first mode a from the external environment.

A method of measuring an observable of a cat qubit will now be detailed with reference to figure 9.

In quantum mechanics, an observable refers to a physical quantity that can be measured or observed. Mathematically, observables are represented by self-adjoint operators acting on the quantum state of an entity. The possible outcomes of measuring an observable are the eigenvalues of the corresponding operator.

General examples of observables are:

- the position operator, which represents the position of a particle in space and of which the eigenvalues correspond to the possible positions of the particle,

- the momentum operator, which represents the momentum of a particle and of which the eigenvalues correspond to the possible moments of the particle,

- the energy operator, which represents the energy of a quantum entity and of which the eigenvalues correspond to the possible energy levels of the quantum entity, and

- the spin operator, which represents the intrinsic angular momentum of a particle and takes the form of a vector operator consisting of three components $\langle S_x \rangle$, $\langle S_y \rangle$ and $\langle S_z \rangle$; the eigenvalues of the spin operators correspond to the possible values of the particle's spin along different directions.

In the context of the present invention, the observable to be measured is the Pauli operator X in the cat qubit manifold, the Pauli operator Y in the cat qubit manifold or the parity operator of the cat qubit mode.

Since the two-photon dissipation stabilizes the coherent states $|{\pm}\alpha\rangle$ and only the cat states $|C_\alpha^\pm\rangle$ form an orthonormal basis down to $\alpha = 0$, the logical 0 and 1 states of the cat qubit basis are defined as follows:

$$|1_{L,\alpha}\rangle = \frac{|C_\alpha^+\rangle + |C_\alpha^-\rangle}{\sqrt{2}}$$

$$|0_{L,\alpha}\rangle = \frac{|C_\alpha^+\rangle - |C_\alpha^-\rangle}{\sqrt{2}}$$

Those states are exponentially close to coherent states $|\pm\alpha\rangle$ when $\alpha \gg 1$. With this definition, the Pauli operators in the cat qubit manifold read:

$$X = |C_\alpha^+\rangle\langle C_\alpha^+| - |C_\alpha^-\rangle\langle C_\alpha^-|$$

$$Y = |C_\alpha^{i+}\rangle\langle C_\alpha^{i+}| - |C_\alpha^{i-}\rangle\langle C_\alpha^{i-}|$$

$$Z = |1_{L,\alpha}\rangle\langle 1_{L,\alpha}| - |0_{L,\alpha}\rangle\langle 0_{L,\alpha}|$$

where the states $|C_\alpha^{i\pm}\rangle$ are the following quantum superpositions of coherent states:

$$|C_\alpha^{i\pm}\rangle = N^\pm(|\alpha\rangle \pm i|-\alpha\rangle)$$

Finally, the parity operator takes the following form:

$$\Pi = e^{i\pi a^\dagger a}$$

It can be noted that the projection of the parity operator on the cat qubit manifold is equal to the Pauli operator X. This property is exploited by the invention to allow for a transmon-free realization of Wigner tomography.

Referring to figure 9, in an operation 900, the quantum system 1 stabilizes a two-dimensional manifold hosting the cat qubit. If the cat qubit mode was originally in a state belonging to the cat qubit manifold, the operation 900 leaves it unchanged. If the cat qubit mode was originally in a state out of the cat qubit manifold, this operation maps the parity operator to the Pauli operator X of the stabilized manifold.

To this end, the command circuit 5 delivers microwave radiation(s) for causing the non-linear superconducting quantum circuit 3 to engineer the jump operator $L_2^\alpha = \sqrt{\kappa_2}(a^2 - \alpha^2)$.

In the case of parametric dissipative stabilization, the microwave source 13 delivers microwave radiation at a frequency equal to $|2f_a - f_b|$ to parametrically drive the non-linear element 7, and the microwave source 17 delivers microwave radiation at a frequency equal to $f_b$ to drive the second mode b.

In the case of resonant dissipative stabilization, the microwave source 17 delivers microwave radiation at a frequency equal to $f_b$ to drive the second mode b for causing the non-linear superconducting quantum circuit 3 to convert the inherent 2-to-1 photon conversion resulting from the relationship $2f_a = f_b$ into two-photon dissipation.

In an operation 910, the observable to be measured is mapped to the Pauli operator Z.

By "mapping an observable to another", it must be understood here that the quantum system 1 carries out a process of transforming one observable to another. From a mathematical point of view, if $\hat{O}$ is the operator to be measured, a process described by a unitary operator $U$ is applied by the quantum system 1 such that $U\hat{O} U^+ = Z$. Consequently, the eigenvectors and eigenvalues of the operator to be measured are mapped in a bijection to the eigenvectors and eigenvalues of the Pauli operator Z. The measurement of the Pauli operator Z thus contains full knowledge about the operator to be measured $\hat{O}$.

Figure 10 illustrates in more detail the mapping operation 910 implemented by the quantum system 1 and shows the operations common to the various possible mappings which will be described in the remainder of the description.

Figure 10 also addresses a key aspect of the mapping as implemented in the context of the present invention: the variations induced on the size of the cat qubit manifold.

In the expression of the jump operator $L_2^\alpha = \sqrt{\kappa_2}(a^2 - \alpha^2)$, $\alpha$ is a complex number that defines the cat qubit. More specifically, $\alpha$ corresponds to the size of the manifold within which the cat qubit is hosted. Once stabilized, the cat qubit is hosted in a two-dimensional manifold of initial size $\alpha_i$ and the jump operator reads $L_2^{\alpha_i} = \sqrt{\kappa_2}(a^2 - \alpha_i^2)$. In the following, $\alpha$ is used as a parameter that can be varied by tuning the drive of the second mode b.

The mapping operation 910 specifically aims at mapping the observable to be measured to the Pauli operator Z in a cat qubit manifold of final size value $\alpha_T$, which may be different than the initial size value $\alpha_i$ of the cat qubit to be measured in order to improve the measurement fidelity.

Indeed, the advantage of the Pauli operator Z, compared to the Pauli operator X and the Pauli operator Y, is that the eigenstates of the Pauli operator Z are stabilized by the two-photon dissipation. Consequently, their lifetime increases exponentially with the size of the cat qubit, so that it is possible to integrate the measurement during a very long time and reach a very good signal-to-noise ratio. If a very long measurement is not possible, as for instance during a quantum error correction cycle, the stabilization of the Pauli operator Z eigenstates by the two-photon dissipation allows to increase $\alpha_T$ up to arbitrary large values without loss of information. In this case, the eigenstates of the observable to be measured are mapped to coherent states $|\alpha_T\rangle$ and $|-\alpha_T\rangle$ which differ by a large amount of photons $4|\alpha_T|^2 = |\alpha_T - (-\alpha_T)|^2$ so that they can be efficiently discriminated even in a short measurement time.

In an operation 1100, the quantum system 1 deflates the cat qubit, hence decreasing the size $\alpha$ of the cat qubit manifold.

To this end, the quantum system 1 reduces or even turns off the drive of the second mode b.

The command circuit 5 tunes the amplitude of the microwave source 17 for causing $\alpha$ to reach a value which square modulus is less than 1, and advantageously equal to 0. Since the cat qubit manifold is defined all the way down to $\alpha = 0$, the operation 1100 maps the Pauli operator X continuously from a cat qubit manifold of initial size value $\alpha_i$ to a cat qubit manifold of size $|\alpha|^2 < 1$, the Pauli operator Y continuously from a cat qubit manifold of initial size value $\alpha_i$ to a cat qubit manifold of size $|\alpha|^2 < 1$ and the Pauli operator Z continuously from a cat qubit manifold of initial size value $\alpha_i$ to a cat qubit manifold of size $|\alpha|^2 < 1$.

At the end of the operation 1100, the cat qubit is in a superposition of substantially only $|0\rangle$ and $|1\rangle$ Fock states.

By "substantially" it should be understood here that the cat qubit is a superposition of several Fock states which are mainly $|0\rangle$ and $|1\rangle$ Fock states. Indeed, as explained above, the definition of the cat states $\left|C_\alpha^\pm\right\rangle$ can be extended to $\alpha = 0$ and, in such a case, the cat qubit manifold spans all superpositions of $|0\rangle$ and $|1\rangle$ Fock states. However, here, since $|\alpha|^2 < 1$, the size of the cat qubit manifold is almost zero, hence some of the Fock states are $|2\rangle$ or more.

In an operation 1200, the quantum system 1 applies a $\frac{\pi}{2}$-Pauli gate to the cat qubit.

By analogy with the Pauli operators described above, the Pauli gates each correspond to a rotation around an axis of the Bloch sphere. The Pauli-X($\theta$) gate is a $\theta$-rotation around the x-axis, the Pauli-Y($\theta$) gate is a $\theta$-rotation around the y-axis and the Pauli-Z($\theta$) gate is a $\theta$-rotation around the z-axis. The $\frac{\pi}{2}$-Pauli gate to be performed by the quantum system 1 depends on the observable to be measured. Strictly speaking, the operation 1200 is the one that maps the observable to be measured to the Pauli operator Z.

Finally, in an operation 1300, the quantum system 1 inflates the cat qubit, hence increasing the size $\alpha$ of the cat qubit manifold.

To this end, the quantum system 1 increases or, if applicable, turns on the drive of the second mode b.

The command circuit 5 tunes the amplitude of the microwave source 17 for causing $\alpha$ to reach the final size value $\alpha_T$ which square modulus is greater than or equal to 2: $|\alpha_T|^2 \geq 2$. The jump operator reads $L_2^{\alpha_T} = \sqrt{\kappa_2}(a^2 - \alpha_T^2)$

As explained hereinafter, a final size value $\alpha_T$ satisfying $|\alpha_T|^2 \geq 2$ represents a substantial improvement of the measurement fidelity compared to the state-of-the-art since increasing $|\alpha_T|^2$ amplifies the amplitude of the measurement signal, hence the measurement fidelity.

In figure 10, the operations 1100, 1200 and 1300 are represented as sequentially implemented. However, in practice, the value of the parameter $\alpha$ is above all a control setpoint for the microwave source arranged to drive the second mode b - here the microwave source 17 - so that the cat qubit reaches in steady state a number of photons corresponding to the square modulus of the setpoint value of $\alpha$. In transient state, though, the actual mean number of photons $\langle a^\dagger a \rangle$ in the cat qubit lags compared to the square modulus of the setpoint value of $\alpha$.

Therefore, to determine the optimal time to apply the $\frac{\pi}{2}$-Pauli gate of the operation 1200, it is more relevant to consider the quantity $\langle a^\dagger a \rangle$. As will be explained later, the $\frac{\pi}{2}$-Pauli gate of the operation 1200 should happen when the quantity $\langle a^\dagger a \rangle$ is less than 2.

Consequently, the operation 1200 typically overlaps in time with both operations 1100 and 1300.

In an operation 920, the quantum system 1 measures the value of the Pauli operator Z. As detailed above, such a Paul operator Z is in a cat qubit manifold of size $\alpha_T$.

Since the eigenstates of the Pauli operator Z - the coherent states $|\alpha_T\rangle$ and $|-\alpha_T\rangle$ - are quasi-classical states that can have a long lifetime, a large number of photons, or both, they can be read with high fidelity with various techniques, including those developed hereinafter:

    i) A displacement operator $D(\alpha_T) = e^{\alpha_T a^\dagger - \alpha_T^* a}$ is applied to the cat qubit. Since the eigenstates of the observable to be measured are mapped onto the coherent states $|\alpha_T\rangle$ or $|-\alpha_T\rangle$, the displacement operator $D(\alpha_T)$ maps the eigenstates of the observable to be measured to the coherent states $|2\alpha_T\rangle$ or $|0\rangle$. Alternatively, a displacement operator $D(-\alpha_T) = e^{-\alpha_T a^\dagger + \alpha_T^* a}$ can be applied to the cat qubit to map the eigenstates of the observable to be measured to the coherent states $|0\rangle$ or $|-2\alpha_T\rangle$. Next, the command circuit 5 - and more particularly the microwave source 27 - delivers microwave radiation at a frequency equal to a resonant frequency $f_b'$ to parametrically drive a four-wave mixing non-linear element to engineer a Hamiltonian H expressed as $H/\hbar = g_L a^\dagger a(b + b^\dagger)$, where $g_L$ is the amplitude of the microwave source 27. The resonant frequency $f_b'$ may be substantially equal to the resonant frequency $f_b$ of the second mode b. For instance, the presence of the longitudinal pump - here the microwave source 25 - can induce a so-called stark shift of the frequency $f_b$. This Hamiltonian H yields through longitudinal coupling between the first mode a and the second mode b. It will result in a displacement of the second mode b by a value $\beta = 8g_L|\alpha_T|^2/\kappa_b$ when the cat qubit is in coherent state $|2\alpha_T\rangle$. Finally, heterodyne or homodyne detection is performed on the second mode b to measure the value of the Pauli operator Z. Strikingly, the detection signal $\beta = 8g_L|\alpha_T|^2/\kappa_b$ can be made arbitrarily large by increasing the size $|\alpha_T|^2$ of the cat qubit in the operation 1300, which therefore acts as an amplification of the measurement. In the embodiment in which a parametric dissipative stabilization is implemented, the required four-wave mixing non-linear element for implementing the longitudinal coupling can be the non-linear element 7 also used to stabilize the cat qubit. However, in the embodiment in which a resonant dissipative stabilization is implemented, the non-linear element 7 is a three-wave mixing non-linear element and, consequently, a four-wave mixing non-linear element must be integrated to the quantum system 1 for implementing the longitudinal coupling and thus to perform the measurement operation. In the case where the four-wave mixing non-linear element is an ATS 7 as shown in figure 2, the radiation of the microwave source 27 also induces a parasitic drive of the buffer. The first order expansion of the "sin-sin" Hamiltonian of the ATS indeed gives $H_{ATS,1} = -(2E_J\varphi_\Sigma + E_L\varphi_\Delta)\varphi$. To suppress this term, a radiation can be applied simultaneously by the microwave source 29 such that $\varphi_\Delta = -(2E_J/E_L)\varphi_\Sigma$.

ii) More generally, any Hamiltonian proportional to $a^\dagger a$ could be used to measure the value of the Pauli operator Z after the application of the displacement operator $D(\pm\alpha_T) = e^{\pm\alpha_T a^\dagger \mp \alpha_T^* a}$. An example would be to change the flux working point of the ATS so that its Hamiltonian induces cross-Kerr in between the first mode a and the second mode b:

$$H/\hbar = \chi a^\dagger a b^\dagger b$$, where $\chi$ is a frequency shift per photon. It results that the frequency of the second mode b would change by a large amount $4|\alpha_T|^2\chi$ when the cat qubit is in coherent state $|2\alpha_T\rangle$. Again, $|\alpha_T|^2$ acts as an amplification of the measured signal. Measuring the frequency of the second mode b would therefore allow to efficiently measure the observable to be measured. Similarly, a four-wave mixing inducing cross-Kerr between the first mode a and a third mode c (not shown in the figures) $H/\hbar = \chi a^\dagger a c^\dagger c$ would be suitable for this measurement. In particular, thanks to the amplification provided by $|\alpha_T|^2$, the third mode c could be a transmon very weakly coupled - that is with a small value of $\chi$ - to the first mode a, such that its impact on the bit-flip is mitigated, but using a large enough $|\alpha_T|^2$ such that the frequency shift of the transmon is measurable.

iii) The command circuit 5 - and more particularly the microwave source 27 - delivers a microwave radiation at a frequency equal to $|(f_b - f_a)/2|$ if a four-wave mixing non-linear element is employed, or at a frequency equal to $|f_b - f_a|$ if a three-wave mixing non-linear element is employed, to parametrically drive the non-linear element 7 for causing the non-linear superconducting quantum circuit 3 to engineer a conversion Hamiltonian H expressed as

$$H/\hbar = g_c(a^\dagger b + b^\dagger a)$$, where $g_c$ is the amplitude of the microwave source 27 and b is the annihilation operator of the second mode b. This Hamiltonian H yields through single-photon conversion between the first mode a and the second mode b. Finally, heterodyne or homodyne detection is performed on the second mode b to measure the value of the Pauli operator Z.

iv) To further increase the signal to noise ratio, a conversion Hamiltonian could be turned on towards a third mode c coupled to a three- or four-wave mixing non-linear element (not shown in the figures) $H/\hbar = g_c(a^\dagger c + c^\dagger a)$, while the two-photon drive generated by the microwave source 17 and, if necessary the two-photon pump generated by the microwave source 13, is turned on to engineer the jump operator $L_2^{\alpha_T}$ stabilizing the coherent states $|\alpha_T\rangle$ and $|-\alpha_T\rangle$ during very long times, such that the measurement can be integrated for an equally long time.

v) The two-photon drive generated by the microwave source 17, and if necessary the two-photon pump generated by the microwave source 13, is turned on to engineer the jump operator $L_2^{\alpha_T}$ and the microwave source 25 directly delivers microwave radiation at a frequency $f_a$ to drive the first mode a so that the Hamiltonian $H_Z$ is expressed as

$$H_Z/\hbar = \ \epsilon_z a + \epsilon_z^* a^\dagger - \text{ or } H_Z/\hbar = \epsilon_z a + \text{h.c.} - \ ,$$ where $\varepsilon_z$ results from the amplitude and phase of the drive of the first mode a. Finally, heterodyne or homodyne detection is performed on the second mode b to measure the value of the Pauli operator Z.

vi) A transmission line is weakly coupled to the first mode a, as was done in Berdou *et al.* (2022), and the electromagnetic field in the transmission line is detected by homodyne or heterodyne detection. To further increase the signal-to-noise ratio, the two-photon drive generated by the microwave source 17, and if necessary the two-photon pump generated by the microwave source 13, can be turned on to engineer the jump operator $L_2^{\alpha_T}$ stabilizing the coherent states $|\alpha_T\rangle$ and $|-\alpha_T\rangle$ during very long times, such that the measurement can be integrated for an equally long time.

The mapping of an observable among the Pauli operator X, the Pauli operator Y and the parity operator to the Pauli operator Z has the advantage that it forms a bijection. Therefore, the value of the Pauli operator Z gives the value of the observable to be measured.

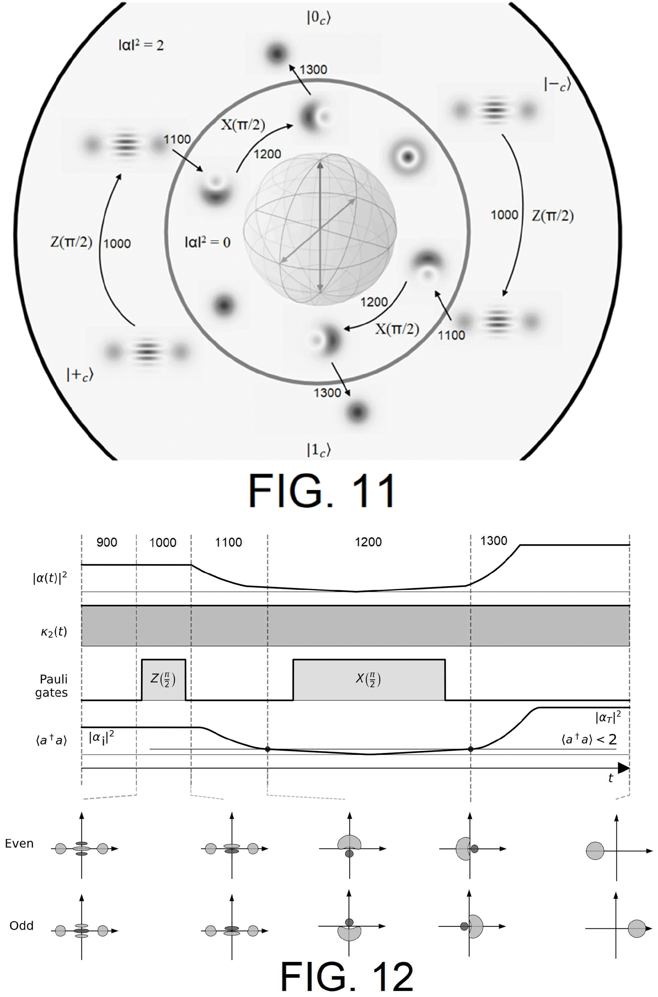

Figure 11 illustrates an example implementation of the mapping operation 910 in an embodiment in which the observable to be measured is the parity operator. This figure shows, in a cat coding space, the rotations of the cat qubit in the Bloch sphere as well as the changes in size of the cat qubit manifold.

As above-mentioned, it should be noted that the stabilization of the cat qubit by engineering the jump operator $L_2^{\alpha}$, implemented throughout operation 900, maps the parity operator to the Pauli operator X. Strictly speaking, figure 11 thus illustrates the mapping of the Pauli operator X to the Pauli operator Z. However, it can be considered that figure 11 illustrates operation 910 both in the context of the measure of the parity operator and in the context of measure of the Pauli operator X.

In the example illustrated in figure 11, the stabilized cat qubit has an initial size $|\alpha_i|^2 = 2$.

In an operation 1000, the quantum system 1 applies a Pauli-Z($\frac{\pi}{2}$) gate to the cat qubit. Consequently, the Pauli operator X is mapped to the Pauli operator Y.

To this end, the command circuit 5 - and more particularly the microwave source 25 - delivers microwave radiation at a frequency equal to $f_a$ to drive the first mode a to engineer a Hamiltonian expressed as $H_z/\hbar = \epsilon_z a + \text{h.c.}$.

In the operation 1100, the quantum system 1 turns off the drive of the second mode b, so that the size of the cat qubit is equal to zero: $|\alpha|^2 = 0$. As previously mentioned, it is also possible to simply reduce the drive of the second mode b. In such a case, the value of $\alpha$ is tuned to a value which square modulus is less than 1.

In the operation 1200, the quantum system 1 applies a Pauli-X($\frac{\pi}{2}$) gate to the cat qubit. Consequently, the Pauli operator Y is mapped to the Pauli operator Z.

A Pauli-X($\theta$) gate in the cat qubit manifold with $\alpha = 0$ is particularly straightforward to perform as it amounts to a rotation of an angle $\theta$ in phase space. The orientation of the cat qubit in phase space is given the relative phase difference in between the absolute phase of the oscillation of the quantum harmonic oscillator $\phi_a$ and the absolute phase of the microwave sources:

$$\Delta\phi = \phi_a - \frac{\phi_p + \phi_d}{2}$$

where $\phi_p$ is the absolute phase of the microwave source 13 and $\phi_b$ is the absolute phase of the microwave source 17. In order to realize the Pauli-X($\frac{\pi}{2}$) gate, it is therefore enough to shift the phase of one of the microwave source 13 and the microwave source 17 by an angle $\pi$, which can be done at the software level almost instantaneously with extreme precision.

In the operation 1300, the quantum system 1 turns on the drive of the second mode b, so that the size of the cat qubit reaches the final size $|\alpha_T|^2$. In the example illustrated in figure 11, the final size is $|\alpha_T|^2 = 2$. Of course, it is also possible to simply increase the drive of the second mode b. In such a case, the value of $\alpha$ is tuned to the final size value $\alpha_T$ which square modulus is greater than or equal to 2.

In an ideal quantum system 1, the theoretical requirements to perform the operations 1100, 1200 and 1300 with 100% of fidelity are the following:

- The $\frac{\pi}{2}$-Pauli gate of the operation 1200 should be done when the cat qubit is strictly in the manifold of size $\alpha = 0$ spanned by the $|0\rangle$ and $|1\rangle$ Fock states because they have the correct rotation symmetry in phase space.
- The operation 1100 should precede operation 1200 and the size of the cat qubit manifold should be reduced adiabatically down to $\alpha = 0$.
- The operation 1300 should follow operation 1200 and the size of the cat qubit manifold should be increased adiabatically up to $\alpha_T$.

However, in practice, a true adiabatic operation is impossible since it would take an infinite amount of time. The optimal time taken by the operations 1100 and 1300 will therefore result from a compromise in between the requirement to perform them fast enough compared to $\kappa_1$ so that single photon losses do not decrease the fidelity of the operations and to perform them slow enough compared to $\kappa_2$ so that these operations can be considered adiabatic. It must be noted that it is mainly the fate of Fock states $|0\rangle$ and $|1\rangle$ that matters for the adiabaticity condition, as explained in Albert et al. (2016) in the article "Holonomic Quantum Control with Continuous Variable Systems" (Physical Review Letters 116, 140502). In other words, it is possible to deflate or inflate the cat quickly when $\alpha \gg 1$, but it must be done slowly compared to $\kappa_2$ when $\alpha \sim 1$. Similarly, the operation 1200 cannot be performed in practice with a cat qubit strictly in the manifold of size $\alpha = 0$, because it would take an infinite amount of time to get there during operation 1100. Still, it will perform well if the probability to have Fock states higher or equal than two photons is small when the $\frac{\pi}{2}$-Pauli gate is applied. In order to have a well-performing operation 1200 while minimizing the duration of the operations 1100 and 1300, the Applicant found that the best compromise was obtained by using a setpoint $\alpha$ which square modulus is less than 1 at the end of the operation 1100 and by performing the Pauli gate of the operation 1200 when $\langle a^\dagger a \rangle$ is strictly smaller than 2. Moreover, since the cat qubit can have various initial states and the exact value of $\langle a^\dagger a \rangle$ during the mapping depends on the initial state, the condition $\langle a^\dagger a \rangle < 2$ can be understood as being satisfied for all the initial states of interest of the cat qubit.

Figure 12 illustrates a sequence of pulses over a period of time that corresponds to the stabilization of the cat qubit and the mapping of the parity operator to the Pauli operator Z. More specifically, the cat qubit is initially stabilized in a manifold of size $\alpha_i$ while the Pauli operator Z is in a cat qubit manifold of size $\alpha_T$. The 2-to-1 photon conversion - represented by $\kappa_2(t)$ - is always on during stabilization and mapping. The square modulus $|\alpha(t)|^2$ curve makes it possible to first observe the stabilization and the application of the Pauli-Z($\frac{\pi}{2}$) gate, then the deflating of the cat qubit and the inflating of the cat qubit. The Pauli-X($\frac{\pi}{2}$) gate is applied to the cat qubit at an instant for which $\langle a^\dagger a \rangle$ is less than 2.

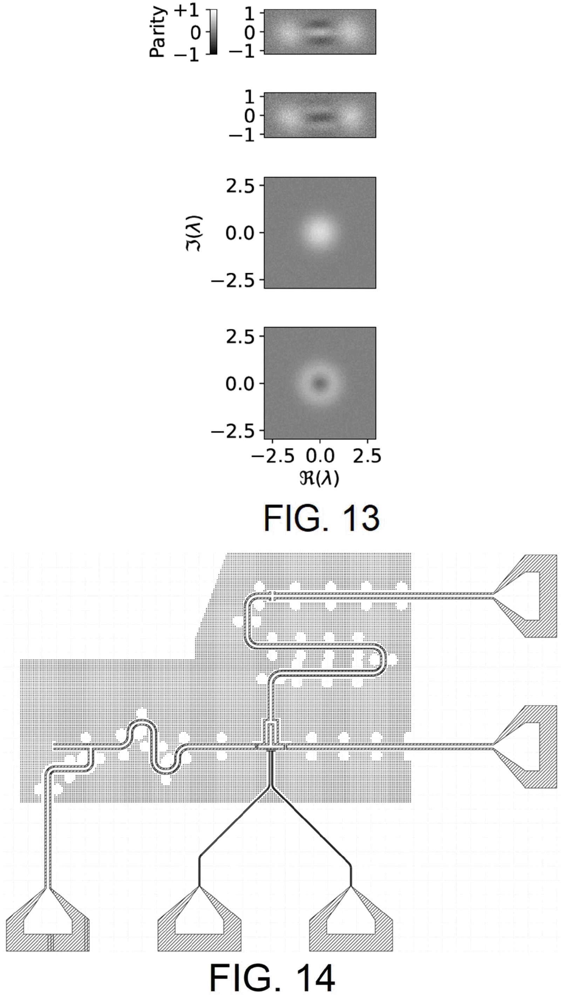

The Applicant has experimentally measured the parity operator of a cat qubit according to the sequence of pulses of figure 11 using the quantum circuit of figure 5. Measurements of the parity operator can be used to perform Wigner tomography, which allows to characterize completely the quantum state of a quantum harmonic oscillator such as the first mode a. More precisely, the Wigner function $W_\rho(\lambda)$ of the quantum state $\rho$ of the first mode a at complex amplitude $\lambda$ is equal to the average value of the parity operator after the quantum state $\rho$ has been displaced by $\lambda$: $W_\rho(\lambda) = \langle \Pi D(\lambda)\rho D(-\lambda) \rangle$. The Wigner tomographies measured, from top to bottom, for mode a initially prepared in states $|C_\alpha^+\rangle$, $|C_\alpha^-\rangle$, $|0\rangle$ and $|1\rangle$ are shown in figure 13 and match precisely what is expected.

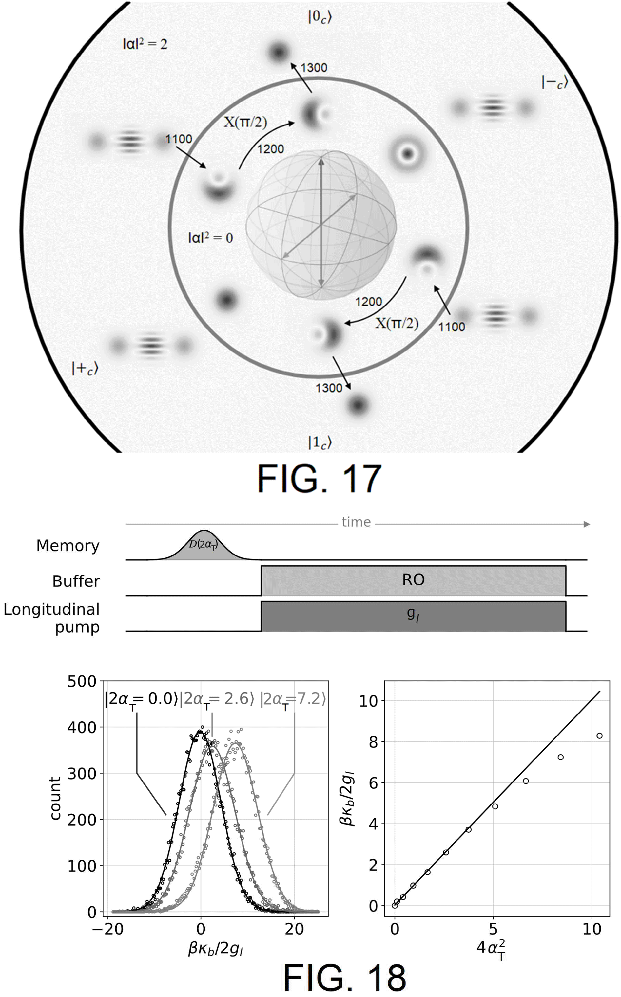

For this measurement, the Applicant used the above-mentioned process (i) to read the Pauli operator Z in the cat qubit manifold of size $\alpha_T$. The pulse sequence used to implement it, as well as characterization of the displacement $\beta$ of mode b depending on the number of photons in the first mode a are shown in figure 18.

Figure 14 is an image of the physical layout of the chip implementing the circuit of figure 5 used to perform the Wigner tomography of figure 13.

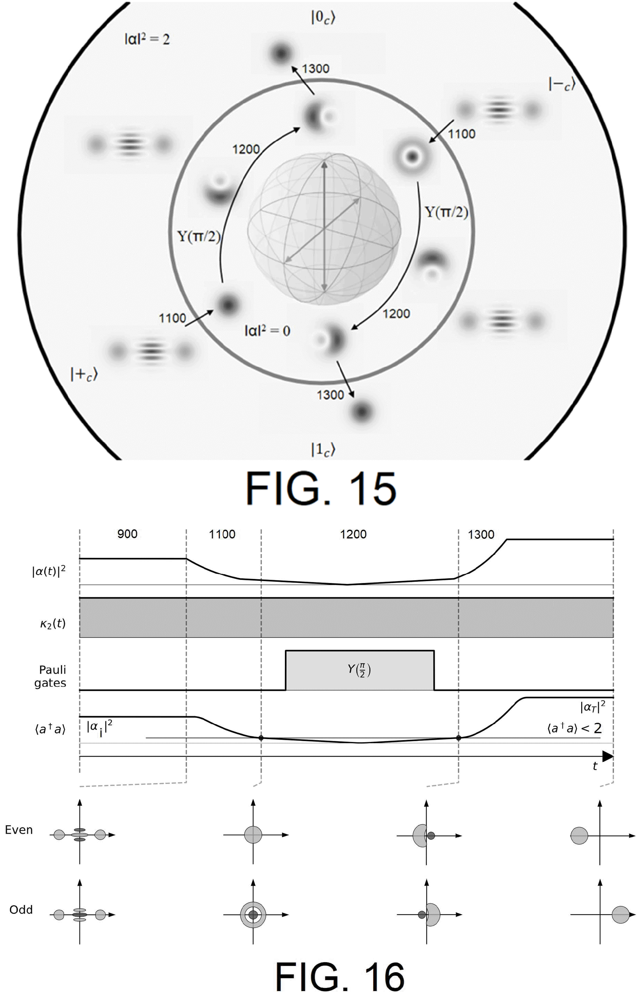

Figure 15 illustrates an example implementation of the mapping operation 910 in another embodiment in which the observable to be measured is the parity operator. This figure shows, in a cat coding space, the rotations of the cat qubit in the Bloch sphere as well as the changes in size of the cat qubit manifold.

Similarly to figure 11, the stabilization of the cat qubit with the engineering of the jump operator $L_2^\alpha$, implemented throughout operation 900, maps the parity operator to the Pauli operator X. Once again, figure 15 illustrates the mapping of the Pauli operator X to the Pauli operator Z. As such, figure 15 illustrates operation 910 both in the context of the measure of the parity operator and in the context of measure of the Pauli operator X.

In the example illustrated in figure 15, the stabilized cat qubit has an initial size $|\alpha|^2 = 2$.

In the operation 1100, the quantum system 1 turns off the drive of the second mode b. The cat qubit reaches a size $|\alpha|^2 = 0$. As previously mentioned, it is also possible to simply reduce the drive of the second mode b. In such a case, the value of $\alpha$ is tuned to a value which square modulus is less than 1.

In the operation 1200, the quantum system 1 applies a Pauli-Y($\frac{\pi}{2}$) gate to the cat qubit. Consequently, the Pauli operator X is directly mapped to the Pauli operator Z. To this end, the command circuit 5 - and more particularly the microwave source 25 - delivers microwave radiation at a frequency equal to $f_a$ to drive the first mode a to engineer a Hamiltonian $H_Z$ expressed as $H_z/\hbar = \epsilon_z a + \text{h. c.}$ .

In the operation 1300, the quantum system 1 turns on the drive of the second mode b, so that the size of the cat qubit reaches the final size $|\alpha_T|^2$. In the example illustrated in figure 15, the final size is $|\alpha_T|^2 = 2$. Of course, it is also possible to simply increase the drive of the second mode b. In such a case, the value of $\alpha$ is tuned to the final size value $\alpha_T$ which square modulus is greater than or equal to 2.

Figure 16 illustrates a sequence of pulses over a period of time that corresponds to the stabilization of the cat qubit and the mapping of the parity operator to the Pauli operator Z. More specifically, the cat qubit is initially stabilized in a manifold of size $\alpha_i$ while the Pauli operator Z is in a cat qubit manifold of size $\alpha_T$. The 2-to-1 photon conversion - represented by $\kappa_2(t)$ - is always on during stabilization and mapping. The square modulus $|\alpha(t)|^2$ curve makes it possible to first observe the stabilization, then the deflating of the cat qubit and the inflating of the cat qubit. The Pauli-Y($\frac{\pi}{2}$) gate is applied to the cat qubit at an instant for which $\langle a^\dagger a \rangle$ is less than 2.

Finally, figure 17 illustrates an example implementation of the mapping operation 910 in an embodiment in which the observable to be measured is the Pauli operator Y. This figure shows, in a cat coding space, the rotations of the cat qubit in the Bloch sphere as well as the changes in size of the cat qubit manifold.

It appears that this mapping operation is similar to the one illustrated in figure 11, except that it is not necessary to map the Pauli operator X to the Pauli operator Y since the observable to be measured is the latter.

The method of the invention does not simply consist in mapping the observable to be measured to the Pauli operator Z. Indeed, the operation of inflating the cat qubit - which corresponds to increasing or turning on the drive of the second mode b - indeed makes it possible to measure the Pauli operator Z in a cat qubit manifold of an arbitrarily large size, i.e. an $\alpha_T$ value such that the square modulus $|\alpha_T|^2$ is greater than or equal to 2. Such a size makes it possible to amplify the signal-to-noise ratio by a large amount, eventually up to the point where the measurement becomes single-shot measurement, that is when the difference in number of photons between the logical states corresponding to the respective possible values of the observable to be measured is sufficiently high to avoid any ambiguity. This is illustrated in figure 18 where the histograms of measurements using the longitudinal coupling of process (i) are more and more separated as $|\alpha_T|^2$ is increased from the histogram corresponding to $\alpha = 0$.

As the overlap is reduced, the signal-to-noise ratio increases and a high fidelity single-shot measurement is likely to be achieved.

Such a method differs in particular from the parity measurement proposed in patent application US 2022/0156622 A1 which describes, in paragraphs [0220]-[0226], a simple deflate of the cat qubit to map the cat state $|C_\alpha^+\rangle$ to $|0\rangle$ and the cat state $|C_\alpha^-\rangle$ to $|1\rangle$. The $|0\rangle$ and $|1\rangle$ Fock states differ by only one photon, which is too low to distinguish them and all indications suggest that a measurement with a longitudinal coupling, as proposed in this prior art document, cannot make it possible to have a satisfactory signal-to-noise ratio. On the contrary, the measurement method (i) with even the minimal bound $|\alpha_T|^2 = 2$ leads to a difference of $4|\alpha_T|^2 = 8$ photons, which is an order of magnitude larger and leads to separated histograms in figure 18.

In addition, the measurement method described in the present invention has the advantage of selecting an appropriate size for the cat qubit manifold for each mapping embodiment, especially for the application of a $\frac{\pi}{2}$-Pauli gate. For example, the Pauli-Z gate is more reliably implemented in a cat qubit manifold whose square modulus is greater than 1, while the Pauli-X gate and the Pauli-Y gate can only be implemented in a cat qubit manifold whose square modulus is less than 1.

List of embodiments

[Embodiment 1] A method of measuring an observable of a cat qubit implemented by a quantum system (1), the observable to be measured being among the parity operator, the Pauli operator X and the Pauli operator Y, said quantum system (1) including a command circuit (5) for delivering microwave radiations and a non-linear superconducting quantum circuit (3) including a three- or four-wave mixing non-linear element (7) and at least one resonant portion (9) to which said three- or four-wave mixing non-linear element (7) is connected, said non-linear superconducting quantum circuit (3) having a first mode (a) with a first resonant frequency and a second mode (b) with a second resonant frequency, said method comprising the following operations:

a) delivering (900), by the command circuit (5), microwave radiation at a frequency equal to the second resonant frequency to the at least one resonant portion (9) to drive the second mode (b), thereby causing the three- or four-wave mixing non-linear element (7) to engineer a jump operator $L_2^\alpha$ expressed as $L_2^\alpha = \sqrt{\kappa_2}(a^2 - \alpha^2)$ stabilizing a two-dimensional manifold hosting the cat qubit, where $\kappa_2$ is the two-photon dissipation rate, $a$ is the annihilation operator of the first mode (a) and $\alpha$ is a complex number resulting from said delivered microwave radiation,

b) mapping (910) the observable to be measured to the Pauli operator Z, said mapping (910) being dependent on the observable to be measured and including at least: b1) turning off or reducing (1100) the drive of the second mode (b) for causing $\alpha$ to reach a value which square modulus is less than 1, and subsequently b2) turning on or increasing (1300) the drive of the second mode (b) for causing $\alpha$ to reach a value ($\alpha_T$) which square modulus is greater than or equal to 2, said mapping (910) further including b3) applying (1200) a $\frac{\pi}{2}$-Pauli gate to the cat qubit during b1) or b2) at an instant for which $\langle a^\dagger a \rangle$ is less than 2, and

c) measuring (920) the value of the Pauli operator Z.

[Embodiment 2] The method of embodiment 1, wherein the observable to be measured is the Pauli operator Y, and wherein b3) includes applying (1200) a Pauli-X($\frac{\pi}{2}$) gate to the cat qubit.

[Embodiment 3] The method of embodiment 1, wherein the observable to be measured is the Pauli operator X, wherein b) further includes b0) applying (1000) a Pauli-Z($\frac{\pi}{2}$) gate to the cat qubit prior to b1), and wherein b3) includes applying (1200) a Pauli-X($\frac{\pi}{2}$) gate to the cat qubit.

[Embodiment 4] The method of embodiment 1, wherein the observable to be measured is the parity operator, said parity operator being mapped to the Pauli operator X throughout a), wherein b) further includes b0) applying (1000) a Pauli-Z($\frac{\pi}{2}$) gate to the cat qubit prior to b1), and wherein b3) includes applying (1200) a Pauli-X($\frac{\pi}{2}$) gate to the cat qubit.

[Embodiment 5] The method of one of embodiments 2 to 4, the command circuit (5) including one or more microwave sources (13, 17) for performing a), wherein applying (1200) a Pauli-X($\frac{\pi}{2}$) gate to the cat qubit is performed by shifting by an angle $\pi$ the phase of a microwave source (13, 17) among said one or more microwave sources (13, 17).

[Embodiment 6] The method of embodiment 1, wherein the observable to be measured is the Pauli operator X, and wherein b3) includes applying (1200) a Pauli-Y($\frac{\pi}{2}$) gate to the cat qubit.

[Embodiment 7] The method of embodiment 1, wherein the observable to be measured is the parity operator, said parity operator being mapped to the Pauli operator X throughout a), and wherein b3) includes applying (1200) a Pauli-Y($\frac{\pi}{2}$) gate to the cat qubit.

[Embodiment 8] The method of one of embodiments 3 to 7, wherein applying (1200) a Pauli-Y($\frac{\pi}{2}$) gate or applying (1000) a Pauli-Z($\frac{\pi}{2}$) gate to the cat qubit is performed by delivering, by the command circuit (5), microwave radiation at a frequency equal to the first resonant frequency to the at least one resonant portion (9) to drive the first mode (a), thereby engineering a Hamiltonian $H_z$ expressed as $H_z/\hbar = \epsilon_z a + \mathrm{h.\,c.}$ , where $\varepsilon_z$ results from the amplitude and phase of the drive of the first mode (a).

[Embodiment 9] The method of one of the preceding embodiments, wherein c) includes c1) applying a displacement operator $D(\pm\alpha_T) = e^{\pm\alpha_T a\dagger \mp \alpha_T^* a}$ to the cat qubit, subsequently c2) delivering, by the command circuit (5), microwave radiation at a frequency equal to a resonant frequency $f_b'$ substantially equal to the second resonant frequency to parametrically drive a four-wave mixing non-linear element (7) of the quantum system (1), thereby causing said four-wave mixing non-linear element (7) to engineer a Hamiltonian H expressed as $H/\hbar = g_L a^\dagger a(b + b^\dagger)$ , where $g_L$ results from the amplitude of said microwave radiation and b is the annihilation operator of the second mode (b), said Hamiltonian H yielding through longitudinal coupling between the first mode (a) and the second mode (b), and c3) performing heterodyne or homodyne detection on the second mode (b).

[Embodiment 10] The method of one of embodiments 1 to 8, wherein c) includes c1) applying a displacement operator $D(\pm\alpha_T) = e^{\pm\alpha_T a\dagger \mp \alpha_T^* a}$ to the cat qubit, subsequently c2) engineering a Hamiltonian H expressed as $H/\hbar = \chi a^\dagger a b^\dagger b$ , where $\chi$ is a frequency shift per photon, and b is the annihilation operator of the second mode (b), said Hamiltonian H yielding through cross-Kerr in between the first mode (a) and the second mode (b), said cross-Kerr being prone to modify the second resonant frequency, and subsequently c3) measuring the second resonant frequency.

[Embodiment 11] The method of one of embodiments 1 to 8, wherein c) includes c1) delivering, by the command circuit (5), microwave radiation equal to the absolute difference between the first resonant frequency and the second resonant frequency if the three- or four-wave mixing non-linear element (7) is a three-wave mixing non-linear element or equal to half of the absolute difference between the first resonant frequency and the second resonant frequency if the three- or four-wave mixing non-linear element (7) is a four-wave mixing non-linear element to parametrically drive the three- or four-wave mixing non-linear element (7), thereby causing said three- or four-wave mixing non-linear element (7) to engineer a Hamiltonian H expressed as $H/\hbar = g_c(a^\dagger b + b^\dagger a)$ , where $g_c$ results from the amplitude of said microwave radiation and b is the annihilation operator of the second mode (b), said Hamiltonian H yielding through single-photon conversion the first mode (a) and the second mode (b), and c2) performing heterodyne or homodyne detection on the second mode (b).

[Embodiment 12] The method of embodiments 1 to 8, wherein c) includes c1) delivering, by the command circuit (5), microwave radiation at a frequency equal to the second resonant frequency to the at least one resonant portion (9) to drive the second mode (b), thereby causing the three- or four-wave mixing non-linear element (7) to engineer a jump operator $L_2^{\alpha_T}$ expressed as $L_2^{\alpha_T} = \sqrt{\kappa_2}(a^2 - \alpha_T^2)$ , c2) delivering, by the command circuit (5), microwave radiation at a frequency equal to the first resonant frequency to the at least one resonant portion (9) to drive the first mode (a), thereby causing said three- or four-wave mixing non-linear element (7) to engineer a Hamiltonian H expressed as $H/\hbar = \epsilon_z a + \mathrm{h.\,c.}$ , where $\varepsilon_z$ results from the amplitude and phase of the drive of the first mode (a), and c3) performing heterodyne or homodyne detection on the second mode (b).

[Embodiment 13] The method of embodiments 1 to 8, a transmission line being weakly coupled to the first mode (a), wherein c) includes performing heterodyne or homodyne detection to detect electromagnetic field in said transmission line.

[Embodiment 14] The method of one of the preceding embodiments, the three- or four-wave mixing non-linear element (7) being a four-wave mixing non-linear element formed by an asymmetrically threaded superconducting quantum interference device.

[Embodiment 15] The method of one of the preceding embodiments, the three- or four-wave mixing non-linear element (7) being a three-wave mixing non-linear element formed by at least one loop (55) including a first Josephson junction (57), a central inductive element (59) and a second Josephson junction (61), the non-linear superconducting quantum circuit (3) being configured such that, when a predetermined current of a constant intensity is applied, the second resonant frequency is substantially equal to twice the first resonant frequency.

**Claims**

1. A method of performing a Pauli gate on a cat qubit implemented by a quantum system (1), the Pauli gate corresponding to a rotation by an angle θ around an axis of the Bloch sphere of the cat qubit, said quantum system (1) including a command circuit (5) for delivering microwave radiations and a non-linear superconducting quantum circuit (3), the command circuit (5) being configured to deliver microwave radiation to the non-linear superconducting quantum circuit (3) to stabilize or confine the cat qubit, said method comprising:

   a) delivering, by the command circuit (5), microwave radiation to the non-linear superconducting quantum circuit (3) to stabilize or confine the cat qubit hosted within a cat qubit manifold in a first mode (a) of the non-linear superconducting quantum circuit (3) having a complex number $\alpha$ defining a size of the cat qubit such that $|\alpha|^2$ is the average number of bosons of the cat qubit manifold;
   b) performing a mapping including at least:

   b1) deflating the cat qubit towards a manifold comprising a superposition of substantially only $|0\rangle$ and $|1\rangle$ Fock states by changing the microwave radiation to decrease the size of the cat qubit $|\alpha|^2$, and subsequently
   b2) inflating the cat qubit towards the cat qubit manifold by changing the microwave radiation to increase the size of the cat qubit $|\alpha|^2$,
   b3) applying the Pauli gate during b1) or b2) by shifting a phase of the microwave radiation by an angle such that the Pauli gate corresponds to the rotation by the angle θ.

2. The method of claim 1, wherein the Pauli gate is a Pauli-Y(θ) gate corresponding to the rotation by the angle θ around the y-axis of the Bloch sphere.

3. The method of claim 1, wherein the Pauli gate is a Pauli-X(θ) gate corresponding to the rotation by the angle θ around the x-axis of the Bloch sphere.

4. The method of claim 3, wherein operation b3) comprises shifting the absolute phase of the microwave radiation such that the relative phase difference between the absolute phase of the microwave radiation and the absolute phase of the oscillation of the first mode $\phi_a$ corresponds to the angle θ.

5. The method of any of the preceding claims wherein, in operation a), to stabilize or confine the cat qubit, the microwave radiation to the non-linear superconducting quantum circuit (3) is configured to engineer:

   a Kerr Hamiltonian $H/\hbar = \frac{K}{2}(a^{\dagger 2} - \alpha^2)(a^2 - \overline{\alpha^2})$, where K is the amplitude of the Kerr Hamiltonian, $a$ is the photon annihilation operator of a mode of said non-linear superconducting quantum circuit (3) in which the cat qubit is hosted;

   a detuned Kerr Hamiltonian $H/\hbar = \frac{K}{2}(a^{\dagger 2} - \alpha^2)(a^2 - \overline{\alpha^2}) - \Delta a^\dagger a$, where $K$ is the amplitude of the Kerr Hamiltonian, $a$ is the photon annihilation operator of a mode of said non-linear superconducting quantum circuit (3) in which the cat qubit is hosted, and $\Delta$ is the detuning factor;

   a two-photon exchange (TPE) Hamiltonian $H/\hbar = g_2(a^2 - \alpha^2)\sigma_+ + \text{h.c.}$, where $g_2$ is the complex two-photon coupling rate, $a$ is the photon annihilation operator of a mode of said non-linear superconducting quantum circuit (3) in which the cat qubit is hosted, and $\sigma_\pm$ are the lowering and raising operators of the two-level system; or

   a jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator of a mode of said non-linear superconducting quantum circuit (3) in which the cat qubit is hosted, r and $\theta$ are the modulus and argument of the complex squeezing parameter $\xi = re^{i\theta}$, realized by coupling a lossy buffer mode b with dissipation rate $\kappa_b$ a four-wave mixing device of the non-linear superconducting quantum circuit (3) both to the mode in which the cat qubit is hosted and by engineering the Hamiltonian

$$H/_\hbar = g_{SC}\left(\left(\cosh(r)a + \sinh(r)e^{i\theta}a^\dagger\right)^2 - \alpha^2\right)b^\dagger + \text{h.c.}$$ , where b is the photon annihilation operator of mode b and $g_{SC}$ is the squeezed two-photon coupling rate, with several pumps delivered by the command circuit (5) at frequencies $2f_a - f_b$, $f_b$ and $2f_a + f_b$, and a drive delivered by the command circuit (5) of the buffer mode at frequency $f_b$ provided $g_{SC} < \kappa_b$.

6. The method of any one of claims 1-4, wherein the non-linear superconducting quantum circuit (3) comprises a three- or four-wave mixing non-linear element (7) and at least one resonant portion (9) to which said three- or four-wave mixing non-linear element (7) is connected, said non-linear superconducting quantum circuit (3) having, in use, a first mode (a) with a first resonant frequency $f_a$ and a second mode (b) with a second resonant frequency $f_b$, and wherein: operation a) comprises delivering, by the command circuit (5), microwave radiation at a frequency equal to the second resonant frequency to the at least one resonant portion (9) to drive the second mode (b), thereby causing the three- or four-wave mixing non-linear element (7) to engineer a jump operator $L_2^\alpha$ expressed as $L_2^\alpha = \sqrt{\kappa_2}(a^2 - \alpha^2)$ stabilizing the cat qubit manifold hosting the cat qubit, where $\kappa_2$ is the two-photon dissipation rate, $a$ is the annihilation operator of the first mode (a) and the complex number $\alpha$ results from said delivered microwave radiation.

7. The method of claim 6, wherein operation a) comprises stabilizing the cat qubit using a parametric stabilization scheme.

8. The method of claim 7, wherein the non-linear superconducting quantum circuit (3) comprises a four-wave mixing non-linear element which is an asymmetrically threaded superconducting quantum interference device (ATS), wherein the parametric stabilization scheme comprises delivering, by the command circuit (5), microwave radiation which is a parametric pump having a pump frequency $f_p$ satisfying $f_p = |2f_a - f_b|$.

9. The method of claim 6, wherein the non-linear superconducting quantum circuit (3) comprises a three-wave mixing non-linear element formed by at least one loop (55) including a first Josephson junction (57), a central inductive element (59) and a second Josephson junction (61), the non-linear superconducting quantum circuit (3) being configured such that, when a predetermined current of a constant intensity is applied, the second resonant frequency is substantially equal to twice the first resonant frequency $2f_a = f_b$ such that operation a) comprises stabilizing the cat qubit using a resonant stabilization scheme.

10. The method of any one of claims 6-9, wherein:

operation b1) comprises turning off or reducing (1100) the drive of the second mode (b) for causing $\alpha$ to reach a value which square modulus is less than 1;
operation b2) comprises turning on or increasing (1300) the drive of the second mode (b) for causing $\alpha$ to reach a value $(\alpha_T)$ which square modulus is greater than or equal to 2;
and operation b3) is performed at an instant for which $\langle a^\dagger a \rangle$ is less than 2.

11. The method of any one of claims 6-10, wherein the shifted phase of the microwave radiation in operation b3) is applied in b2).

12. The method of claims 8 or 10-11 when dependent on claim 8, wherein the Pauli gate is a Pauli-X($\theta$) gate corresponding to the rotation by the angle $\theta$ around the x-axis of the Bloch sphere, wherein operation b3) comprises shifting the absolute phase of the drive of the second mode (b) such that the relative phase difference between the absolute phase of the drive of the second mode (b) and the absolute phase of the oscillation of the first mode corresponds to the angle $\theta$.

13. The method of any one of claims 6-11, wherein the Pauli gate is a Pauli-X($\theta$) gate corresponding to the rotation by the angle $\theta$ around the x-axis of the Bloch sphere, wherein operation b3) comprises:

shifting the phase of the parametric pump such that the relative phase difference between the absolute phase, of both the parametric pump and the drive of the second mode (b), and the absolute phase of the oscillation of the first mode corresponds to the angle $\theta$; or
shifting the phases of both the parametric pump and the drive of the second mode (b) such that the relative phase difference between the absolute phase, of both the parametric pump and the drive of the second mode (b), and the absolute phase of the oscillation of the first mode $\phi_a$ corresponds to the angle $\theta$.

14. A quantum system (1) for performing a Pauli gate on a cat qubit, the Pauli gate corresponding to a rotation by an angle $\theta$ around an axis of the Bloch sphere of the cat qubit, said quantum system (1) comprising:

a non-linear superconducting quantum circuit (3); and
a command circuit (5) arranged to deliver microwave radiation to the non-linear superconducting quantum circuit (3), the command circuit (5) being configured to perform the method of any of the preceding claims.

FIG. 1

FIG. 2

FIG. 3

FIG. 4

FIG. 5

EP 4 786 410 A2

FIG. 6

FIG. 7

a

b

FIG. 8

STAB 900

MAPP Z 910

MEASUR 920

FIG. 9

910

DEFL 1100

PAULI GATE 1200

INFL 1300

FIG. 10

FIG. 11

FIG. 12

FIG. 13

FIG. 14

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21306965

- US 20220156622 A1

**Non-patent literature cited in the description**

- **R. LESCANNE et al.** Exponential suppression of bit-flips in a qubit encoded in an oscillator. *Nature Physics*, 2020
- **Z. LEGHTAS et al.** Confining the state of light to a quantum manifold by engineered two-photon loss. *Science*, 2015, vol. 347 (6224)
- **S. TOUZARD et al.** Coherent Oscillations inside a Quantum Manifold Stabilized by Dissipation. *Physical Review X*, 2018, vol. 8, 023005

- **BERDOU et al.** One hundred second bit-flip time in a two-photon dissipative oscillator. *arXiv:2204.09128*, 2022, https://arxiv.org/pdf/2204.09128.pdf
- **ALBERT et al.** Holonomic Quantum Control with Continuous Variable Systems. *Physical Review Letters*, 2016, vol. 116, 140502